# EUROPÄISCHE PATENTSCHRIFT

(11) **EP 1 502 008 B1**
(45) Veröffentlichungstag und Bekanntmachung des Hinweises auf die Patenterteilung: **28.11.2007**
(21) Anmeldenummer: 03747382.4
(22) Anmeldetag: 05.05.2003
(51) Int. Cl.: F01D 5/02, F16D 1/08

(54) **BEFESTIGUNGSVORRICHTUNG FÜR EIN LAUFRAD AUF EINER WELLE**
DEVICE FOR FIXING A ROTOR ON A SHAFT
DISPOSITIF PERMETTANT DE FIXER UN ROTOR SUR UN ARBRE

(30) Priorität: 06.05.2002 CH 808022002
(43) Veröffentlichungstag der Anmeldung: 02.02.2005
(73) Patentinhaber: ABB Turbo Systems AG, 5400 Baden (CH)
(72) Erfinder: THIELE, Martin, CH-5406 Baden-Rütihof (CH); KÜHNEL, Janpeter, CH-8180 Bülach (CH); BÄTTIG, Josef, CH-5704 Egliswil (CH)
(74) Vertreter: ABB Patent Attorneys
(86) Internationale Anmeldenummer: PCT/CH2003/000287
(87) Internationale Veröffentlichungsnummer: WO 2003/093651

(56) Entgegenhaltungen:
- DE-A- 4 141 427
- DE-C- 499 929
- US-A- 2 441 432
- US-A- 5 961 247
- "TURBOCHARGERS FROM EUROPEAN GAS TURBINES A MAJOR PLAYER IN THE TURBOCHARGER WORLD" DIESEL & GAS TURBINE WORLDWIDE, 1998, Seiten 686-687, XP008006503 BROOKFIELD, WI, USA in der Anmeldung erwähnt

## Beschreibung

### Technisches Gebiet

Die Erfindung bezieht sich auf eine Befestigungsvorrichtung für ein Laufrad auf einer Welle, insbesondere für ein Laufrad eines Turboladers auf einer Turboladerwelle, gemäss dem Oberbegriff des Patentanspruches 1.

### Stand der Technik

Bei schnelllaufenden Maschinen, wie beispielsweise bei schnelllaufenden Strömungsmaschinen, muss die Verbindung zwischen den Laufrädern und der Welle hohen Anforderungen genügen. Diese Verbindungen müssen bei hohen Drehzahlen trotz der grossen auftretenden Kräfte absolut drehfest sein, hohe Drehmomente übertragen können, eine hohe Standzeit aufweisen, aber vielfach dennoch für Wartungszwecke lösbar sein.

Verschiedene Möglichkeiten zur Realisierung solcher Verbindungen sind vorgeschlagen worden. So kann das Laufrad beispielsweise mit einer durchgehenden Zentralbohrung versehen sein und die Welle mit einer Gewindebohrung, so dass das Laufrad dann mit einer Spannschraube aufgeschraubt werden kann. Oder das Laufrad ist auf seiner der Welle zugewandten Seite mit einem Sackloch mit Innengewinde versehen und am Wellenende ist ein Gewindezapfen mit passendem Aussengewinde vorgesehen, so dass das Laufrad direkt auf die Welle aufgeschraubt werden kann. Da die Laufräder häufig aus einem anderen Material gefertigt sind als die Welle, kommt es bei diesen Schraubverbindungen immer wieder zu Problemen aufgrund verschiedener Ausdehnungskoeffizienten der Materialien, was zu Rotorunwuchten während des Betriebes führen kann. Auch kann das weichere Material bei mehrfachem Lösen und Anziehen im Bereich des Gewindes Schaden nehmen. Weiter kann es zu sogenanntem Fressen der Gewinde kommen. Gewindefurchen, die direkt in die Nabe des Laufrades oder die Welle eingearbeitet sind können zu ungünstigen Kerbwirkungen in den Bauteilen führen, was bei Gewinden in der Nabe zum Bruch der Nabe führen kann. Bei stossaufgeladenen Turboladern, deren Laufräder hohen Drehmomentschwankungen ausgesetzt sind, ist dies ein besonders grosses Problem.

Um die durch die Gewinde hervorgerufenen Probleme zu vermeiden ist vorgeschlagen worden bei direkt auf die Welle aufgeschraubten Laufrädern zwischen der Welle und dem Laufrad eine Büchse anzuordnen. Eine derartige Verbindung ist beispielsweise von Napier EGT 297 aus "Diesel- und Gas Turbine Catalog 1998, Volume 63; Seite 686", bekannt. Das Verdichterrad eines Turboladers ist in diesem Beispiel wellenseitig mit einem Nabenfortsatz versehen, der ein zentrales Sackloch aufweist. In dieses Sackloch ist kraftschlüssig eine Büchse eingesetzt. Die Büchse weist einen sich axial erstreckender Büchsenteil auf und wellenseitig einen senkrecht davon radial nach aussen abstehenden kreisringförmigen Büchsenftansch, der etwa den gleichen Aussendurchmesser hat wie die Stirnseite des Nabenfortsatzes. Der Büchsenteil ist so bemessen, dass er knapp bis zum Grund des Sackloches reicht, wenn der Büchsenflansch mit der Stirnseite des Nabenfortsatzes in Anschlag gebracht wird. Im Büchsenteil sind zwei axial hintereinander liegende zylindrische Ausnehmungen vorgesehen, wobei die laufradseitige zylindrische Ausnehmung einen geringeren Durchmesser als die wellenseitige zylindrische Ausnehmung hat und ist mit einem Innengewinde versehen, Zwischen den beiden Ausnehmungen ist eine Schulter ausgebildet, die im Zusammenwirken mit einer Schulter des gegengleich zu der Büchseninnenseite ausgebildeten Wellenzapfen, zur Zentrierung des Verdichterrades bezüglich der Welle dient. Bei der Montage wird zunächst die Büchse kraftschlüssig in die zentrale Ausnehmung des Verdichterrades eingesetzt und anschliessend das Verdichterrad mit der Büchse auf den Wellenzapfen der Turboladerwelle aufgeschraubt. Das Verdichterrad weist selbst kein Gewinde auf und ist so von den Kerbspannungen befreit. Ausserdem kann bei einer entsprechenden Wahl des Büchsenmaterials das Problem der unterschiedlichen Ausdehnungskoeffizienten und des Fressens sowie der Beschädigung des weicheren Gewindes bei mehrmaligem Lösen und Anziehen verringert oder ganz ausgeräumt werden. Bei dieser Konstruktion müssen Sackloch und Stirnseite des Nabenfortsatzes, die Büchse mit Flansch, Schulter und Gewinde sowie der Wellenzapfen mit Gewinde und Schulter, sehr genau gearbeitet sein, was aufwendig und teuer ist.

Ausserdem führt diese Konstruktion zu hohen Leckageströmen. Trotzdem ist eine solche Verbindung für Verbindungen, bei denen sehr hohe Drehmomente bzw. hohe Drehmomentschwankungen zwischen Laufrad und Welle übertragen werden müssen, wie dies beispielsweise bei stossaufgeladenen Turboladem der Fall ist, nicht einsetzbar, da die Drehmomentübertragung unzureichend ist.

### Darstellung der Erfindung

Es ist deshalb Aufgabe der Erfindung, eine Befestigungsvorrichtung für ein Laufrad auf einer Welle, insbesondere für das Laufrad eines Turboladers auf einer Turboladerwelle, zu schaffen, welche die obengenannten Nachteile vermeidet und die Übertragung auch sehr grosser Drehmomente und/oder grosser Drehmomentschwankungen erlaubt.

Diese Aufgabe löst eine Befestigungsvorrichtung für ein Laufrad auf einer Welle mit den Merkmalen des Patentanspruches 1.

Die erfindungsgemässe Befestigungsvorrichtung umfasst neben dem oben beschriebenen, bekannten Nabenfortsatz mit zentrischer Ausnehmung auf der Welfenseite des Laufrades und der in den Nabenfortsatz kraftschlüssig einsetzbaren und auf die Welle aufschraubbaren Büchse, noch eine kraftschlüssig radial aussen mit dem Nabenfortsatz verbindbare presshülse. Der Nabenfortsatz ist hierfür zumindest im Bereich seines wellenseitigen Endes etwa in Form eines Hohlzylinders ausgebildet, wobei seine radial äussere Seite aber auch leicht konisch, sich wellenseitig verjüngend ausgebildet sein kann. Eine solche konische Ausbildung elgnet sich besonders gut als Presssitzt. Durch die aussere Presshülse können höhere Drehmomente und auch höhere Drehmomentschwankungen abgenommen

Ist in montiertem Zustand das Laufrad wellenseitig mittels eines feststehenden Gehäusebauteils vom Lagergehäuse getrennt und hintergreift dieses Gehäusebauteil den Nabenfortsatz mit Büchse und Presshülse wellenseitig radial nach innen, so können die Leckageströme verringert werden. Hilfreich ist es hierbei, wenn eine Hilfslagerscheibe axial zwischen Axiallager und Nabenfortsatz angeordnet ist und sich in montiertem Zustand vorzugsweise mit einem Teil der Büchse oder einem Teil der Presshülse in Anschlag befindet.

Eine weitere Verringerung der Leckageströme kann erreicht werden, indem zwischen Prasshülse und Gehäusebauteil und/oder zwischen Büchse und Gehäusebauteil eine Dichtung, vorzugsweise eine Labyrinthdichtung, vorgesehen ist. Dazu sind mit Vorteil die dem Gehäusebauteil benachbarten Seiten von Presshülse und/oder Büchse zumindest zum Teil als der eine Teil einer Labyrinthdichtung und die dem Wellenzapfen zugewandte Seite des Gehäusebauteils zumindest zum Teil als der andere Teil der Labyrinthdichtung ausgebildet.

Sind auf dem Aussenumfang des Wellenstumpfes eine oder mehrere Zentrierflächen vorgesehen, die mit einer oder mehreren Zentrierflächen auf dem innenumfang der Büchse zentrierend zusammenwirken, so lässt sich eine einfache und sehr genaue Zentrierung er reichen. Axial benachbart zu den Zentrierflächen sind auf dem Aussenumfang des Wellenstumpfs und dem Innenumfang dar Büchse Gewinde angeordnet, die formschlüssig zusammenwirken und eine drehfeste Verbindung zwischen Laufrad und Welle herstellen. Vörteilhaft ist es-, wenn die axiale Ausdehnung des Gewindes etwa ein bis zwei Drittel der radial inneren Axialerstreckung der Büchse entspricht.

Für einen guten Sitz weist die Büchse axial hintereinander Abschnitte mit unterschiedlichem gegen das Laufrad hin abnehmenden Innendurchmessern auf, die mit dem Wellenzapfen gegengleich ausgebildet sind. Ist, das Innengewinde der Büchse zum Aufschrauben auf den Wellenzapfen auf einem Abschnitt mit grossem Innendurchmesser der Büchse angeordnet, so wirkt sich dies positiv auf die Übertragung von Drehmomenten und Drehmomentschwankungen aus..

Neben einem sich axial erstreckenden Hülsenteil haben Büchse und/oder Presshülse mit Vorteil einen radial nach aussen bzw. radial nach innen abstehenden kreisringförmigen Flansch, der sich im montiertem Zustand mit der wellenseitigen Stirnseite des Nabenfortsatzes in Anschlag befindet. Diese Flansche greifen In montiertem Zustand radial einander. Wenn nur die Presshülse oder nur die Büchse einen Flansch aufweist, dann erstreckt sich dieser Flansch vorzugsweise derart radial, dass er den Büchsenteil der Büchse bzw, den Hülsenteil Presshülse hintergreift.

Weitere bevorzugte Ausführungsformen sind Gegenstand weiterer abhängiger Patentansprüche.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: einen verdichterseitigen Ausschnitt eines Turboladers mit einem mittels einer erfindungsgemässen Befestigungsvorrichtung auf einer Turboladerwelle befestigten Verdichterrad;
- Fig. 2: in Vergrösserung einen Ausschnitt aus Fig. 1 mit der erfindungsgemässen Befestigungsvorrichtung in einer ersten Ausführungsvariante;
- Fig. 3 bis 6: in analoger Darstellung zur Darstellung der Fig. 2 verschiedene weitere Ausführungsformen der erfindungsgemässen Befestigungsvorrichtung.

Die in den Zeichnungen verwendeten Bezugszeichen und deren Bedeutung sind in der Bezugszeichenliste zusammengefasst aufgellstet. Grundsätzlich sind in den Figuren gleiche Teils mit gleichen Bezugszeichen versehen. Die beschriebene Ausführungsform steht beispielhaft für den Erfindungsgegenstand und hat keine beschränkende Wirkung.

### Wege zur Ausführung der Erfindung

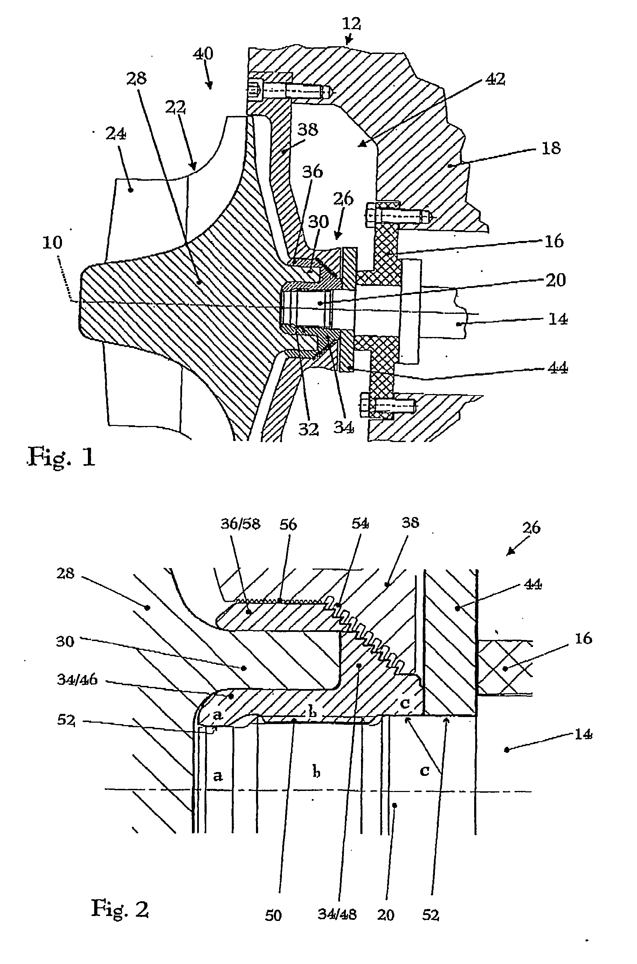

Figur 1 zeigt als Beispiel für eine erfindungsgemässe Befestigung eines Laufrades 22 auf einer Welle 14 einen Ausschnitt aus einer Strömungsmaschine. Dargestellt ist entlang seiner Längsachse 10 ein Ausschnitt eines Turboladers auf dessen Verdichterseite 12. Eine Turbaladervvelle 14 ist verdichterseitig radial und axial in einem Lagerelement 16, das in einem Lagergehäuse 18 abgestützt ist, gelagert. Die Welle 14 weist einen Wellenzapfen 20 auf, der laufradseifig aus dem Lagerelement 18 hinausragt. Der Wellenzapfen 20 trägt ein Verdichterrad als Laufrad 22 mit Laufschaufeln 24. Das Laufrad/Verdichterrad 22 ist mit Hilfe einer eründungsgamässen Befestigungsvorrichtung 26 auf dem Wellenzapfen 20 befestigt. Das Laufrad 22 umfasst eine Nabe 28 auf der die Laufschaufeln 24 angeordnet sind. Die Nabe 28 ist wettenseitig mit einem Nabenfortsatz 30 versehen, der eine zentrische Ausnehmung 32 aufweist und im Bereich seines wellenseitigen Endes etwa in Form eines Hohlzylinders ausgebildet ist. In die Ausnehmung 32 ist kraftschlüssig eine Büchse 34 eingesetzt, die auf den Wellenzapfen 20 aufgeschraubt ist. Radial aussen auf dem Nabenfortsatz 30 ist kraftschlüssig eine Presshülse 36 angeordnet, die für eine sehr gute Drehmomentübertragung sorgt. Eine Zwischenwand 38 des Turboladers, die am Lagergehäuse 18 fixiert, ist und die den Verdichterraum 40 vom Lagerraum 42 des Turboladers trennt, umfasst entlang des Umfangs den Nabenfortsatz 30 mit Büchse 34 und Presshülse 38 und hintergreift diese teilweise. Axial zwischen dem Nabenfortsatz 30 mit Büchse 34 und Presshülse 36 und dem Lagerelement 16 ist eine Hilfslagerscheibe 44 vorgesehen. Diese Hilfslagerscheibe 44 befindet sich in dem hier gezeigten Beispiel mit einem Teil der Büchse 34 axial in Anschlag.

Fig. 2 zeigt die erfindungsgemässen Befestigungsvorrichtung 26 aus Fig. 1 im Detail, Wie zu erkennen ist, weist die Büchse 34 eine sich in Achsrichtung erstreckende Büchsenhülse 46 und einen radial nach aussen abstehenden kreisringförmigen Flansch 48 mit einer gegen die Achse 10 hin geneigten, der Zwischenwand 38 zugewandten Seite aufweist. Der Flansch 48 befindet sich im montiertem Zustand mit der wellenseitigen Stirnseite des Nabenfortsatzes 30 in Anschlag und hat den gleichen Aussendurchmesser wie der hohlzylinderische Nabenfortsetz 30. Auf diese Weise kann der Flansch 48 auf Stoss mit der radial inneren Seite der Presshülse 36, die in diesem Beispiel nur einen sich axial erstreckenden Hülsenteil 58 umfasst, montiert werden. Die Büchse 34 weist drei axial hintereinander liegende Abschnitte a, b, c mit unterschiedlichem Innendurchmesser auf, die gegen das Laufrad 22 hin abnehmen. Der Wellenzapfen 20 weist drei gegengleich ausgebildete Abschnitte a, b, c mit gegen das Laufrad hin abnehmenden Aussendurchmessern auf, so dass Wellenzapfen 20 und Büchse 34 ohne weiteres ineinander passen. Der mittlere der drei Abschnitte b ist mit einem Gewinde 50 zum Aufschrauben der Büchse 34 auf den Wellenzapfen 20 versehen. Im Bereich der Abschnitte a und b sind auf dem Innenumfang der Büchse 34 und auf dem Aussenumfang des Wellenzapfens 20 Zentrierflächen 52 vorgesehen, die zentrierend zusammenwirken. Die axiale Ausdehnung des Gewindes 50 entspricht etwa der Hälfte der radial inneren Axialerstreckung der Büchse 34. Wie aus Fig. 2 ersichtlich erstreckt sich die wellenseitige Zentrierfläche 52 in Abschnitt c des Wellenzapfens 20, die mit der Zentrierfläche 52 des Abschnittes c der Büchse 34 zusammenwirkt, axial in Richtung Lagerelement 16 über den Abschnitt c der Büchse 34 hinaus und dient so auch dem Hilfslager 44 als Zentriersitz.

Ebenfalls gut zu erkennen ist die zwischen Presshülse 36 und Zwischenwand 38 sowie zwischen Büchse 34 und Zwischenwand 38 ausgebildete Labyrinthdichtung 54. Die der Zwischenwand 38 benachbarten, gegen die Längsachse 10 geneigten Seiten von Presshülse 36 und Büchse 34 sind als der eine Teil der Labyrinthdichtung 54 und die dem Wellenzapfen 20 zugewandte, gegen die Längsachse geneigte Seite der Zwischenwand 38 als der andere Teil der Labyrinthdichtung 54 ausgsbildet. In diesem speziellen Fall ist die sich parallel zur Längsachse erstreckende radial äussere Seite der Presshülse 36 ohne Labyrinthzacken 56 ausgebildet, während die gegenüberliegende Seite der Zwischenwand 38 solche Zacken 56 aufweist. Die Kombination der verschiedenen technischen Massnahmen führen zusammen zu einem optimalen Schutz vor Leckageströme aus dem Verdichterraum 40: eine den Nabenfortsatz 30 mit Presshülse 36 und Büchse 34 hintergreifende Zwischenwand 38, ein abdichtendes Hilfslager 44 und die Labyrinthdichtung 54. Wie aus den weiteren Beispielen ersichtlich, ist es aber auch möglich nur einzelne dieser Massnahmen unabhängig von den anderen zu verwirklichen.

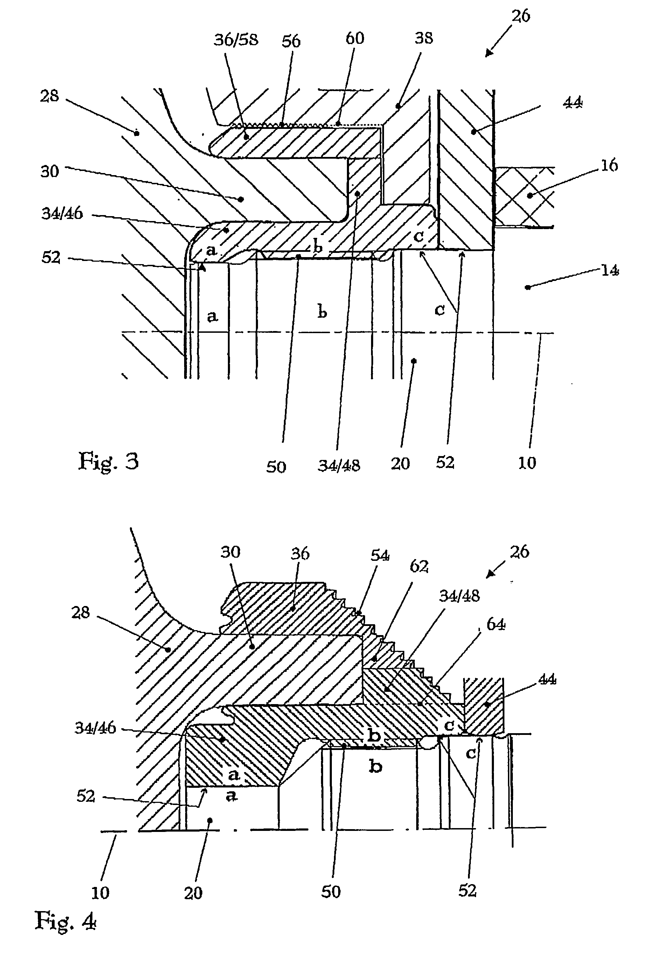

Fig. 3 zeigt eine erfindungsgemäss Befestigungsvorrichtung 26, die aufgebaut ist, wie diejenige die in Fig. 1 und 2 dargestellt ist, bei der aber Presshülse 36, Büchse 34 und Zwischenwand 38 keine gegen die Achse 10 geneigte Seite aufweisen. Es ist keine Labyrinthdichtung 54 vorgesehen. Die sich parallel zur Längsachse 10 erstreckende radial äussere Seite der Zwischenwand 38 kann wiederum Labyrinthzacken 58 aufweisen, sie kann aber auch ohne solche Zacken ausgebildet sein, wie dies im wellenseitigen Bereich 60 durch die gestrichelte Linie angedeutet ist. Die gegenüberliegende Seite der Presshülse 36 ist ohne Labyrinthzacken 56 ausgebildet.

Die in Fig. 4 dargestellte Befestigungsvorrichtung 26 ist wiederum prinzipiell aufgebaut, wie diejenige aus Fig. 1 und 2. In dieser Ausführungsform weist aber nicht nur die Büchse 34 einen ringförmigen Flansch 48 auf, sondern auch die Presshülse 36 ist wellenseitig mit einem Ringflansch 62 ausgebildet, der sich in montiertem Zustand mit der Stirnseite des Nabenfortsatzes 30 im Anschlag befindet. Die Büchse und die Presshülse sind derart ausgebildet, dass sich die Flansche 48, 62 nach dem Aufpressen oder Aufschrumpfen auf den Nabenfortsatz 30 etwa im Stoss zueinander befinden. Entgegen der in Fig. 3 dargestellten Ausführungsform könnte aber auch, wie dies durch die gestrichelte Linie 64 angedeutet ist, die Büchse 34 ohne ringförmigen Flansch 48 ausgebildet sein und dafür der Ringflansch 62 der Presshülse sich radial nach innen bis zum Innendurchmesser des hohlzylindrischen Nabenfortsatz 30 erstrecken. Die Zwischenwand 38 ist in dieser Figur nicht dargestellt, bildet aber mit Presshülse 36 und Büchse 34 wieder eine Labyrinthdichtung 54. Im Gegensatz zu den in den Fig. 1 bis 3 dargestellten Ausführungsformen der Befestigungsvorrichtung 26 ist in diesem Beispiel der erste Abschnitt a des Wellenzapfens 20 mit einem sehr viel kleineren Aussendurchmesser ausgebildet. Gegengleich dazu ist die Büchse 34 in ihrem Abschnitt a mit einem ebenfalls viel kleineren innendurchmesser versehen. Dies führt zu geringeren Kerbspannungen im Einstich zwischen Abschnitt a und b. Die Flächen dieser Abschnitte a sind aber wiederum als Zentrierflächen 52 ausgebildet.

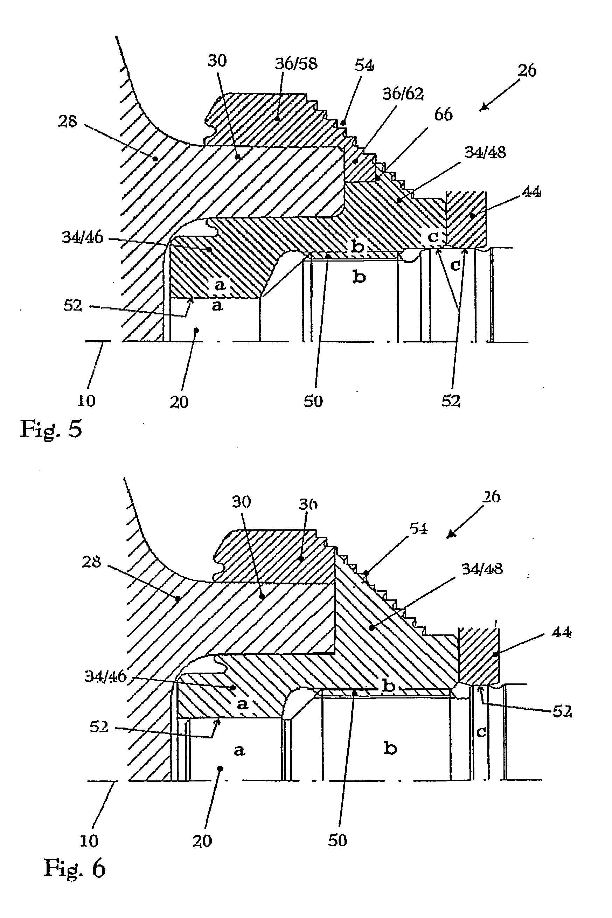

Die in Fig. 5 gezeigte Ausführungsform der Befestigungsvorrichtung 26 ist aufgebaut wie diejenige aus Fig. 4, wobei die beiden Flansche 48, 62 von Büchse 34 und Presshülse 36 ineinandergreifen statt stossend angeordnet zu sein. Der kreisringförmige Flansche 48 der Büchse 34 ist hierfür mit einer Schulter 66 versehen.

Wie die Ausführungsform aus Fig. 6 zeigt, kann die Büchse 34 auch nur zwei Abschnitte a, b mit unterschiedlichen Innendurchmessern aufweisen, wobei auf dem wellenseitigen Abschnitt b mit dem grösseren Innendurchmesser das Gewinde 50 angeordnet ist und auf dem laufradseitigen Abschnitt a mit dem geringeren Innendurchmesser die Zentrierfläche 52. Der Wellenzapfen 20 ist wiederum gegengleich ausgebildet, weist aber wellenseitig einen zusätzlichen Abschnitt c mit einer Zentrierfläche 52 für das Hilfslager 44 auf. Der ringförmige Flansch 48 der Büchse 34 ragt radial über den Nabenfortsatz 30 hinaus und hintergreift die Presshülse 36.

Obwohl dies in den Figuren nirgends explizit gezeigt ist, kann der Nabenfortsatz 30 auch konisch sich erweiternd gegen das Laufrad 22 ausgebildet sein. Dies kann für die kraftschlüssige Verbindung zwischen Nabenfortsatz 30 und Presshülse bzw. Büchse vorteilhaft sein. Die In den einzelnen Figuren 1 bis 6 gezeigten Merkmale der erfindungsgemässen Befestigungsvorrichtung 26 können mehr oder weniger in beliebiger Weise miteinander kombiniert werden. Das Gewinde 50 zum Aufschrauben auf den Wellenzapfen 20 befindet sich aber vorteilhaft auf einem Abschnitt mit grossern Durchmesser und entspricht etwa einem Drittel bis zwei Dritteln der radial inneren Axialerstreckung der Büchse 34. Die Anzahl der Zentrierflächen kann auch grösser sein als 2, wenn dies aufgrund der Geometrie des Laufrades 22 und seines Nebenfortsatzes 30 sinnvoll ist oder ausser dem Hilfslager 44 noch weitere zentrierbedürftige Elemente zwischen Nabenfortsatz 30 und Lagerelement 16 angeordnet werden sollen. Auch kann mehr als nur ein Gewinde vorgesehen sein. Büchse 34 und Presshülse 36 können auch einstückig ausgebildet sein. Dies stellt allerdings höhere Anforderungen an die Fertigung des Bauteils 34/36 und an die Herstellung der kraftschlüssigen Verbindung mit dem Nabenfortsatz 30. Büchse 34 wie auch Presshülse 36 werden vor der Montage des Laufrades 22 auf den Nabenfortsatz 30 aufgepresst oder aufgeschrumpft. Dann wird das Laufrad 22 zusammen mit der Presshülse 36 und der Büchse 34 mittels des Gewindes 50 in der Büchse 34 auf den Wellenzapfen 20 aufgeschraubt.

### Bezugszeichenliste

- 10: Längsachse
- 12: Verdichterseite des Turboladers
- 14: Welle
- 16: Lagerelement
- 18: Lagergehäuse
- 20: Wellenzapfen
- 22: Laufrad/Verdichterrad
- 24: Laufschaufeln
- 26: Befestigungsvorrichtung
- 28: Nabe
- 30: Nabenfortsatz
- 32: Ausnehmung
- 34: Büchse
- 36: Presshülse
- 38: Zwischenwand
- 40: Verdichterraum
- 42: Lagerraum
- 44: Hiffstager
- 46: Büchsenhülse
- 48: kreisringförmiger Flansch
- 50: Gewinde
- 52: Zentrierfläche
- 54: Labyrinthdichtung
- 56: Labyrinthzacken
- 58: Hülsenteil
- 60: wellenseitiger Bereich
- 62: Ringflansch
- 64: gestrichelte Linie
- 66: Schulter

## Patentansprüche

1. Befestigungsvorrichtung für ein Laufrad (28) auf einer Welle (14), insbesondere für ein Laufrad eines Turboladers auf einer Turboladerwelle, umfassend eine auf einen Wellenstumpf (20) der Welle aufschraubbare Büchse (34), und einen wellenseitigen Nabenfortsatz (30) des Laufrades mit einer zentrischen Ausnehmung, in welche die Büchse kraftschlüssig einsetzbar ist, wobei der Nabenfortsatz (30) zumindest im Bereich seines wellenseitigen Endes in Form eines etwa zylindrischen Hohlkörpers ausgebildet ist, **dadurch gekennzeichnet, dass** radial aussen auf den Nabenfortsatz (30) eine kraftschlüssig mit dem Nabenfortsatz (30) verbundene Presshülse (36) vorgesehen ist, und dass der Nabenfortsatz zwischen Büchse und Presshülse kraftschlüssig festgeklemmt ist.

2. Befestigungsvorrichtung nach Anspruch 1, **dadurch gekennzeichnet, dass** ein Hilfslager (44) vorgesehen ist, welches axial zwischen einem die Welle (14) stützenden Lagerelement (16) und dem Nabenfortsatz (30) angeordnet ist und sich in montiertem Zustand vorzugsweise mit einem Teil der Büchse (34) oder einem Teil der Presshülse (36) in Anschlag befindet.

3. Befestigungsvorrichtung nach Anspruch 1 oder 2, **dadurch gekennzeichnet, dass** das Laufrad (22) in montiertem Zustand wellenseitig mittels einer feststehenden Zwischenwand (38) vom Lagerraum (42) getrennt ist und die Zwischenwand (38) den Nabenfortsatz (30) mit Büchse (34) und Presshülse (36) wellenseitig radial nach innen hintergreift.

4. Befestigungsvorrichtung nach Anspruch 3, **dadurch gekennzeichnet, dass** zwischen Presshülse (36) und Zwischenwand (38) und/oder zwischen Büchse (34) und Zwischenwand (38) eine Dichtung, vorzugsweise eine Labyrinthdichtung, vorgesehen ist.

5. Befestigungsvorrichtung nach Anspruch 4, **dadurch gekennzeichnet, dass** die der Zwischenwand (38) benachbarten Seiten von Presshülse (36) und/oder Büchse (34) zumindest zum Teil als der eine Teil einer Labyrinthdichtung und die dem Wellenzapfen (20) zugewandte Seite der Zwischenwand (38) zumindest zum Teil als der andere Teil dar Labyrinthdichtung ausgebildet ist.

6. Befestigungsvorrichtung nach einem der vorhergehenden Ansprüche, **dadurch gekennzeichnet, dass** auf dem Aussenumfang des Wellenzapfens (20) eine oder mehrere Zentrierflächen (52) vorgesehen sind, die mit einer oder mehreren Zentrierflächen (52) auf dem innenumfang der Büchse (34) zentrierend zusammenwirken, und dass auf dem Aussenumfang des Wellenzapfens (20) und dem Innenumfang der Büchse (34) axial benachbart zu den Zentrierflächen (52) ein oder mehrere Gewinde (50) angeordnet sind die formschlüssig zusammenwirken, wobei die axiale Ausdehnung des/der Gewinde(s) etwa einem Drittel bis zwei Dritteln der radial inneren Axialerstreckung der Büchse (34) entspricht.

7. Befestigungsvorrichtung nach einem der vorhergehenden Ansprüche, **dadurch gekennzeichnet, dass** die Büchse (34) axial hintereinander Abschnitte (a, b, c) mit unterschiedlichem lnnendurchmesser aufweist, wobei die Innendurchmesser gegen das Laufrad (22) hin abnehmen, und ein Innengewinde (50) zum Aufschrauben auf den Wellenzapfen (20), der gegengleich ausgebildet ist, auf einem Abschnitt mit grossern Durchmesser angeordnet ist.

8. Befestigungsvorrichtung nach einem der vorhergehenden Ansprüche, **dadurch gekennzeichnet, dass** die Büchse (34) eine sich axial erstreckende Büchsenhülse (46) und einen radial nach aussen abstehenden kreisringförmigen Flansch (48) aufweist, wobei sich der Flansch (48) im montiertem Zustand mit der wellenseitigen Stirnseite des Nabenfortsatzes (30) in Anschlag befindet und vorzugsweise einen Aussendurchmesser aufweist, der etwa dem Aussendurchmesser des Nabenfortsatzes (30) entspricht,

9. Befestigungsvorrichtung nach einem der vorhergehenden Ansprüche, **dadurch gekennzeichnet, dass** die Presshülse (36) einen sich axial erstreckenden Hülsenteil (58) und einen radial nach innen abstehenden Ringflansch (62) aufweist, wobei sich der Ringflansch (62) im montiertem Zustand mit der wellenseitigen Stirnseite des Nabenfortsatzes (30) in Anschlag befindet und vorzugsweise einen Innendurchmesser aufweist, der etwa dem Innendurchmesser der zentrischen Ausnehmung im Nabenfortsatz (30) entspricht.

10. Befestigungsvorrichtung nach Anspruch 8 oder 9, **dadurch gekennzeichnet, dass** der Ringflansch (62) der Presshülse (36) und der kreisringförmige Flansch (48) der Büchse (34) in montiertem Zustand radial einander berühren oder mit Schultern (66) derart ausgestaltet sind, dass sie radial formschlüssig ineinander greifen oder dass nur die Presshülse (36) oder nur die Büchse (34) einen Flansch (62 bzw. 48) aufweist und dieser Flansch (62, 48) sich vorzugsweise derart radial erstreckt, dass er die Büchsenhülse (46) der Büchse (34) bzw. den Hülsenteil (58) Presshülse (36) hintergreift.

## Claims

1. Fastening arrangement for an impeller (22) on a shaft (14), in particular for an impeller of a turbocharger on a turbocharger shaft, comprising a bush (34), which can be screwed onto a shaft journal (20) of the shaft, and a shaft-side hub extension (30) of the impeller having a central recess, into which the bush can be inserted in a frictional manner, the hub extension (30), at least in the region of its shaft-side end, being designed in the form of an approximately cylindrical hollow body, **characterized in that** a press sleeve (36) frictionally connected to the hub extension (30) is provided radially on the outside on the hub extension (30), and **in that** the hub extension is clamped in place frictionally between bush and press sleeve.

2. Fastening arrangement according to Claim 1, **characterized in that** an auxiliary bearing (44) is provided which is arranged axially between a bearing element (16) supporting the shaft (14) and the hub extension (30) and in the fitted state preferably bears against part of the bush (34) or part of the press sleeve (36).

3. Fastening arrangement according to Claim 1 or 2, **characterized in that** the impeller (22), in the fitted state, is separated on the shaft side from the bearing space (42) by means of a fixed intermediate wall (38), and the intermediate wall (38) engages on the shaft side radially behind the hub extension (30) together with bush (34) and press sleeve (36).

4. Fastening arrangement according to Claim 3, **characterized in that** a seal, preferably a labyrinth seal, is provided between press sleeve (36) and intermediate wall (38) and/or between bush (34) and intermediate wall (38).

5. Fastening arrangement according to Claim 4, **characterized in that** those sides of press sleeve (36) and/or bush (34) which are adjacent to the intermediate wall (38) are designed at least partly as the one part of a labyrinth seal, and that side of the intermediate wall (38) which faces the shaft journal (20) is designed at least partly as the other part of the labyrinth seal.

6. Fastening arrangement according to one of the preceding claims, **characterized in that** one or more centering surfaces (52) are provided on the outer circumference of the shaft journal (20), these centering surfaces (52) interacting in a centering manner with one or more centering surfaces (52) on the inner circumference of the bush (34), and **in that** one or more threads (50) are arranged on the outer circumference of the shaft journal (20) and the inner circumference of the bush (34) axially adjacent to the centering surfaces (52), these threads (50) interacting in a positive-locking manner, the axial extent of the thread(s) corresponding approximately to one third to two thirds of the radially inner axial extent of the bush (34).

7. Fastening arrangement according to one of the preceding claims, **characterized in that** the bush (34) has sections (a, b, c) having a different inside diameter axially one behind the other, the inside diameters decreasing toward the impeller (22), and an internal thread (50) for screwing onto the shaft journal (20), which is of diametrically opposed design, is arranged on a section having a large diameter.

8. Fastening arrangement according to one of the preceding claims, **characterized in that** the bush (34) has an axially extending bush sleeve (46) and an annular flange (48) projecting radially outward, the flange (48), in the fitted state, bearing against the shaft-side end face of the hub extension (30) and preferably having an outside diameter which corresponds approximately to the outside diameter of the hub extension (30).

9. Fastening arrangement according to one of the preceding claims, **characterized in that** the press sleeve (36) has an axially extending sleeve part (58) and an annular flange (62) projecting radially inward, the annular flange (62), in the fitted state, bearing against the shaft-side end face of the hub extension (30) and preferably having an inside diameter which corresponds approximately to the inside diameter of the central recess in the hub extension (30).

10. Fastening arrangement according to claim 8 or 9, **characterized in that** the annular flange (62) of the press sleeve (36) and the annular flange (48) of the bush (34) touch one another radially in the fitted state or are designed with shoulders (66) in such a way that they engage radially one inside the other in a positive-locking manner, or **in that** only the press sleeve (36) or only the bush (34) has a flange (62 or 48, resp.) and this flange (62, 48) preferably extends radially in such a way that it engages behind the bush sleeve (48) of the bush (34) or the sleeve part (58) of the press sleeve (36).

## Revendications

1. Dispositif de fixation d'un rotor (22) sur un arbre (14), notamment d'un rotor d'un turbocompresseur sur un arbre de turbocompresseur, comprenant une douille (34) pouvant être vissée sur un bout d'arbre (20) de l'arbre, et une projection de moyeu (30) du rotor, du côté de l'arbre, comprenant un évidement central, dans lequel la douille peut être insérée par engagement par force, la projection de moyeu (30) étant réalisée, au moins dans la région de son extrémité du côté de l'arbre, en forme de corps creux approximativement cylindrique, **caractérisé en ce que** l'on prévoit un manchon de pressage (36) connecté par engagement par force avec la projection de moyeu (30), radialement à l'extérieur sur la projection de moyeu (30), et **en ce que** la projection de moyeu est serrée fixement par engagement par force entre la douille et le manchon de pressage.

2. Dispositif de fixation selon la revendication 1, **caractérisé en ce qu'**il est prévu un palier auxiliaire (44) qui est disposé axialement entre un élément de palier (16) supportant l'arbre (14) et la projection de moyeu (30), et qui se trouve dans l'état monté en butée de préférence avec une partie de la douille (34) ou une partie du manchon de pressage (36).

3. Dispositif de fixation selon la revendication 1 ou 2, **caractérisé en ce que** le rotor (22) est séparé, dans l'état monté, du côté de l'arbre de l'espace de palier (42) au moyen d'une paroi intermédiaire fixe (38) et la paroi intermédiaire (38) vient en prise radialement vers l'intérieur du côté de l'arbre avec la projection de moyeu (30) avec la douille (34) et le manchon de pressage (36).

4. Dispositif de fixation selon la revendication 3, **caractérisé en ce qu'**il est prévu entre le manchon de pressage (36) et la paroi intermédiaire (38) et/ou entre la douille (34) et la paroi intermédiaire (38) un joint d'étanchéité, de préférence un joint à labyrinthe.

5. Dispositif de fixation selon la revendication 4, **caractérisé en ce que** les côtés du manchon de pressage (36) et/ou de la douille (34) adjacents à la paroi intermédiaire (38) sont réalisés au moins en partie en tant que la première partie d'un joint à labyrinthe, et le côté de la paroi intermédiaire (38) tourné vers le tourillon d'arbre (20) est réalisé au moins en partie en tant que l'autre partie du joint à labyrinthe.

6. Dispositif de fixation selon l'une quelconque des revendications précédentes, **caractérisé en ce que** l'on prévoit sur la périphérie extérieure du tourillon d'arbre (20) une ou plusieurs surfaces de centrage (52), qui coopèrent par centrage avec une ou plusieurs faces de centrage (52) sur la périphérique interne de la douille (34), et **en ce qu'**un ou plusieurs filetages (50) sont disposés sur la périphérie extérieure du tourillon d'arbre (20) et la périphérie intérieure de la douille (34) de manière axialement adjacente aux faces de centrage (52), lesquels filetages coopèrent par engagement positif, l'étendue axiale du ou des filetages représentant environ un tiers à deux tiers de l'étendue axiale radialement interne de la douille (34).

7. Dispositif de fixation selon l'une quelconque des revendications précédentes, **caractérisé en ce que** la douille (34) présente des portions (a, b, c) disposées axialement les unes derrière les autres avec un diamètre intérieur différent, les diamètres intérieurs diminuant en direction du rotor (22), et un filetage interne (50) pour effectuer le vissage sur le tourillon d'arbre (20), lequel est réalisé de manière diamétralement opposée, étant disposé sur une portion de plus gros diamètre.

8. Dispositif de fixation selon l'une quelconque des revendications précédentes, **caractérisé en ce que** la douille (34) présente un manchon de douille (46) s'étendant axialement et une bride de forme annulaire circulaire (48) saillant radialement vers l'extérieur, la bride (48) se trouvant dans l'état monté en butée avec le côté frontal de la projection de moyeu (30) du côté de l'arbre et présentant de préférence un diamètre extérieur qui correspond approximativement au diamètre extérieur de la projection de moyeu (30).

9. Dispositif de fixation selon l'une quelconque des revendications précédentes, **caractérisé en ce que** le manchon de pressage (36) présente une partie de manchon (58) s'étendant axialement et une bride annulaire (62) saillant radialement vers l'intérieur, la bride annulaire (62) se trouvant en butée avec le côté frontal de la projection de moyeu (30) du côté de l'arbre dans l'état monté et présentant de préférence un diamètre intérieur qui correspond approximativement au diamètre intérieur de l'évidement central dans la projection de moyeu (30).

10. Dispositif de fixation selon la revendication 8 ou 9, **caractérisé en ce que** la bride annulaire (62) du manchon de pressage (36) et la bride de forme annulaire circulaire (48) de la douille (34) sont en contact radial l'une avec l'autre dans l'état monté ou sont configurées avec des épaulements (66) de telle sorte qu'elles viennent en prise l'une dans l'autre radialement par engagement positif ou que seulement le manchon de pressage (36) ou seulement la douille (34) présente une bride (62 ou 48), et cette bride (62, 48) s'étend de préférence radialement de telle sorte qu'elle vienne en prise par l'arrière avec le manchon de douille (46) de la douille (34) ou avec la partie de manchon (58) du manchon de pressage (36).
